# EUROPEAN PATENT SPECIFICATION

(11) **EP 2 021 137 B1**
(45) Date of publication and mention of the grant of the patent: **25.01.2012**
(21) Application number: 07734534.6
(22) Date of filing: 10.05.2007
(51) Int. Cl.: B23P 21/00, B21D 53/74, B23P 19/00

(54) **MACHINE FOR ASSEMBLING METAL SECTION BARS OF FRAMES**
MASCHINE ZUR MONTAGE VON METALLPROFILSTANGEN VON RAHMEN
MACHINE-OUTIL DESTINEE A ASSEMBLER DES PROFILES METALLIQUES

(30) Priority: 10.05.2006 IT MO20060146
(43) Date of publication of application: 11.02.2009
(73) Proprietor: Emmegi S.P.A., 41010 Limidi di Soliera (MO) (IT)
(72) Inventor: CAIUMI, Andrea, 41012 Carpi (MO) (IT)
(74) Representative: Crugnola, Pietro
(86) International application number: PCT/IB2007/001224
(87) International publication number: WO 2007/129215

(56) References cited:
- EP-A- 0 420 909
- EP-A- 0 925 868
- EP-A- 1 134 054
- EP-A- 1 459 821
- WO-A-01/47662
- WO-A-2004/091867
- DE-A1- 19 813 261
- DE-A1- 19 832 397
- DE-U1-202005 011 265
- JP-A- 5 018 165
- JP-A- 7 185 966
- JP-A- 9 057 551
- JP-A- 59 088 230
- JP-A- 60 135 149
- US-A- 5 370 835
- US-A1- 2002 033 236

## Description

The invention relates to a machine tool according the preamble of claim 1 arranged for assembling metal section bars of casings.

In particular, the invention relates to a caulking machine arranged for caulking metal section bars for making casings of frames, such as, for example, windows, french windows, doors, shutters, and the like.

The caulking machines used in the door and window industry, or corner assembling machines, are arranged for fixing the corners of the casings.

Each corner of a casing is defined by a pair of metal section bars, for example extruded aluminium sections, that are appropriately placed near one another and previously connected at respective end portions by connecting elements, or corner joints.

Each corner joint, which for example also may be an extruded aluminium section, comprises a pair of arms each provided with a fixing seat, and arranged in such a way as to make a substantially L-shaped structure.

Each arm is arranged for being inserted into a respective housing obtained in the aforesaid end portions of the section bars to be joined.

In order to fix a pair of section bars to the respective corner joint, and thus make a corner of the casing, it is necessary to deform plastically a portion of the metal section bars that is positioned near the corresponding fixing seat.

In this way, the deformed portions each engage the respective fixing seat, achieving mechanical locking between the section bars and the corner joint interposed therebetween.

Subsequently, depending on the different types of casings that it is desired to make, a glue can be injected into holes that have previously been made in the section bars, which glue is arranged for stably fixing the section bars. Caulking machines are known that are arranged for fixing the corners of a casing, comprising a box framework closed below by a base and by a supporting plate above.

With the supporting plate there is associated a supporting element, which is substantially L-shaped, arranged for supporting, in use, a pair of section bars to be caulked, previously connected by a corner joint by an operator.

These machines further comprise a caulking head supported by the supporting plate and arranged for caulking and gluing, each time, a pair of section bars, until the desired casing is made.

In particular, the caulking head is provided with a caulking clamp, positioned near the vertex of the supporting element, comprising a pair of jaws, each supporting a metal cutter arranged for plastically deforming a respective portion of metal section bar facing the latter.

In order to make a casing using known caulking machines, it is therefore necessary for an operator to connect manually a first section bar to a second section bar by a first corner joint, position an L-shaped structure thus obtained on the supporting element, and manually drive the caulking head, which fixes the first section bar to the second section bar and makes a first corner of the casing.

Subsequently, the operator removes from the caulking machine the L-shaped structure that has just been fixed, inserts into one of the free ends of the latter a second corner joint, and associates therewith a third section bar, obtaining a U-shaped structure.

Subsequently, the operator manually positions the U-shaped structure thus obtained on the supporting element, and manually drives the caulking head that fixes the third section bar to the L-shaped structure, making a second corner of the casing.

Still subsequently, the operator removes from the caulking machine the thus fixed U-shaped structure, inserts a third and a fourth corner joint into a fourth section bar and associates the fourth section bar with the free ends of the U-shaped structure, obtaining a closed, for example rectangular, structure.

Subsequently, the operator manually positions the closed structure thereby obtained on the supporting element, and manually drives the caulking head that fixes the fourth section bar to one of the free ends of the U-shaped structure so as to make a third corner of the casing.

Still subsequently, the operator removes the partially fixed closed structure, rotates the partially fixed closed structure and repositions the partially fixed closed structure on the caulking head that fixes a fourth corner of the casing.

It should be noted that during caulking operations, the caulking forces are discharged by the caulking clamps onto the supporting plate, caulking clamps being associated with the latter by a threaded connection.

A drawback of known caulking machines consists of the low productivity thereof.

In fact, these machines enable only one corner at a time to be caulked, which corner must have been previously assembled manually by an operator.

A further drawback consists of the need to provide an operator, with a consequent increase in production costs, to perform manually the tasks of assembling and positioning on the caulking machine the section bars to be fixed.

This means that such tasks are excessively slow and laborious.

Further, the operator may commit centring errors and compromise the subsequent caulking of the section bars, or injure himself by coming into contact accidentally with the free ends of the section bars to be joined.

Also manually moving the partially assembled section bars, in particular for section bars of large dimensions, may be particularly heavy for the operator.

A still further drawback relates to the operations that are necessary for reconfiguring the aforesaid caulking machines following a change in the size of the section bars to be caulked.

In fact, these operations are particularly slow and difficult.

EP-A-0925868 discloses an apparatus in accordance with the preamble of claim 1 for the production of window frames made of profile sections comprising an assembly unit arranged for supporting and assembling the profile sections. The assembly unit is in connection with an insertion device which is provided upstream the assembly unit and is arranged so as to convey the profile sections to an insertion position on the assembly unit.

JP 59 088230 A discloses an assembly base for the construction of an assembly system employing an assembly robot having three rectangular axes. The assembly base comprises a jig station movable from an assembly position to a processing position.

JP 60 135149 A discloses an apparatus for assembling a box structure comprising an assembly station for assembling the box structure and a processing station on which the assembled parts of the box structure are joined together. US-A-5,379,835 discloses an apparatus for manufacturing rectangular frames on which frame elements are assembled and joined together on a turntable.

An object of the invention is to improve the machine tools arranged for assembling metal section bars of casings. Another object is to improve machine tools arranged for caulking metal section bars for making casings.

A further object is to make machine tools that enable productivity to be increased with respect to known caulking machines.

A still further object is to obtain machine tools that enable the section bars to be assembled rapidly.

Still another object is to make machine tools that enable rapid and precise centring of the section bars to be assembled.

Another still further object is to make machine tools that are easily and rapidly reconfigurable following a change in the size of the section bars to be caulked.

Still another object is to obtain caulking machines provided with a device for discharging the caulking forces that is alternative to known devices.

In a first aspect of the invention, there is provided a machine tool for assembling metal section bars of casings comprising an assembly unit arranged for supporting and assembling said metal section bars, said assembly unit being movable between a first operating position in which said metal section bars are positionable on said assembly unit and a second operating position in which said metal section bars can be subjected to a desired machining, characterized in that said assembly unit is rotatable around a rotation axis between said first operating position and said second operating position, said assembly unit comprising supporting frame means arranged for supporting said metal section bars and said casings, said supporting frame means comprises a first frame and a second frame positioned on sides opposite with respect to said rotation axis.

This machine tool may comprise at said first operating position and at the aforesaid second operating position respectively a first manipulating unit and a second manipulating unit, each of which is provided with an anthropomorphic robot.

In particular, the anthropomorphic robot of the first manipulating unit is arranged for loading said metal section bars on said assembly unit, whilst the anthropomorphic robot of the second manipulating unit can be provided with caulking means arranged for caulking and gluing said metal section bars, or with a drilling unit arranged for drilling said section bars, or with a broaching machine arranged for inserting broaches into said section bars, or with a screwing head.

Owing to this aspect of the invention, it is possible to make highly automated machines that enable the metal section bars to be positioned, assembled and caulked automatically.

This enables the productivity of the machines to be significantly increased by reducing production time and reducing or even eliminating the need for an operator.

This further enables the machine to be reconfigured easily and quickly following a change in the size of the section bars to be assembled.

In fact, it is sufficient, depending on the size of the section bars to be assembled, on the one hand to reprogram appropriately the assembly unit, the first manipulating unit and the second manipulating unit and on the other to change, if necessary, the caulking tools.

The invention can be better understood and implemented with reference to the attached drawings in which an embodiment of the invention is shown by way of non-limiting example, in which:
Figure 1 is a schematic top view of a system for machining and assembling casings of frames;
Figure 2 is a schematic front view, with some details removed, of an assembly unit included in the system in Figure 1;
Figure 3 is a top view of the assembly unit in Figure 2;
Figure 4 is a schematic front view of a centring device included in the assembly unit in Figure 2;
Figures 5 to 10 illustrate a possible operating sequence of the system in Figure 1;
Figure 11 is a top view of a caulking device included in the system in Figure 1;
Figure 12 is a partially sectioned view from below of the caulking device in Figure 11;
Figure 13 is a longitudinal section of the caulking device in Figure 11.

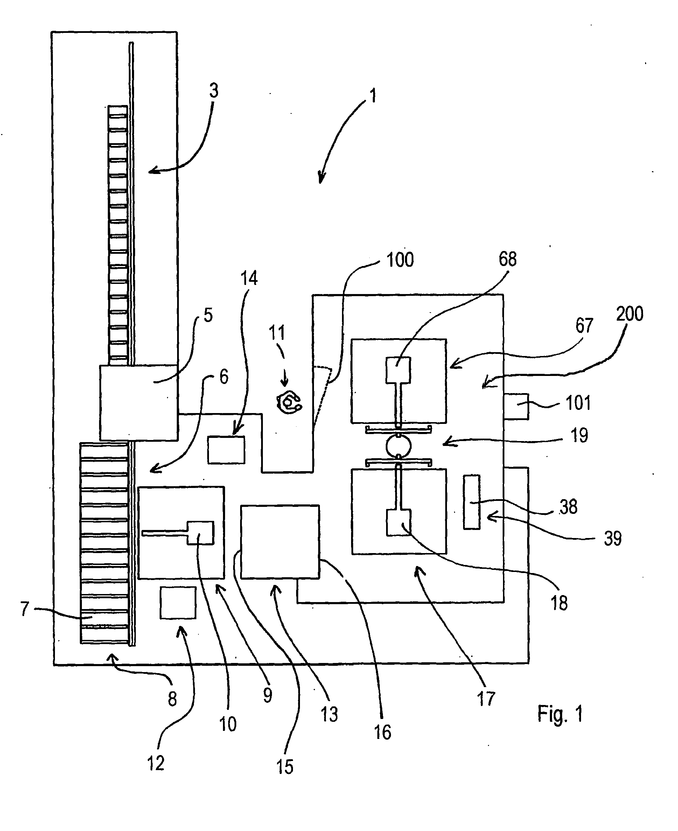

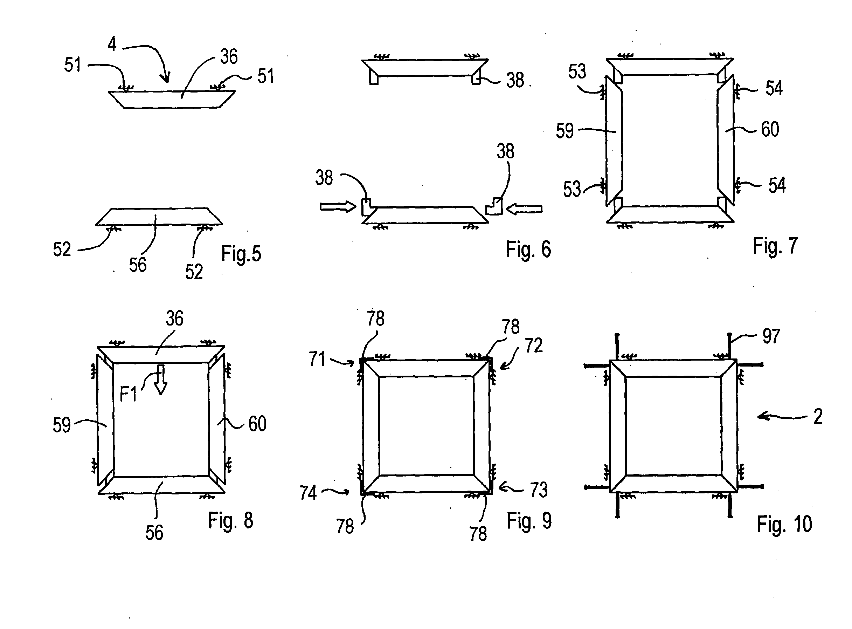

With reference to Figure 1, there is illustrated a system 1 used in the door and window industry for machining and assembling casings 2 of frames (Figure 10) such as, for example, windows, french windows, doors, shutters, and the like.

The system 1 comprises a loading magazine 3 arranged for loading onto the caulking machine 1 section bars 4 (Figure 5) that have not yet been machined, for example extruded aluminium sections, arranged, once they have been finished, for being assembled to make a casing 2.

The loading magazine 3 is provided with gripping means, which are not shown, which are arranged for firmly gripping the section bars 4 and for conveying the latter to a cutting/milling centre 5 positioned downstream of the loading magazine 3.

The cutting/milling centre 5 is arranged for cutting and milling the unworked section bars 4 firmly gripped by the aforesaid gripping means.

The system 1 further comprises an unloading magazine 6 positioned downstream of the cutting/milling centre 5 and arranged for receiving the semifinished section bars 4 from the latter.

The unloading magazine 6 is provided with detecting means, that is not shown, arranged for detecting the presence of reject section bars 4.

If the detecting means detects the presence of reject section bars 4 the latter are conveyed by a conveyor belt 7 to a removal zone 8 where they are removed by an operator 11.

The system 1 further comprises a handling station 9, facing the unloading magazine 6, and provided with a first anthropomorphic robot 10, for example an anthropomorphic robot with six controlled axes.

The first robot 10 is arranged for removing the semifinished section bars 4 from the unloading magazine 6, positioning the semifinished section bars 4 in a cleaning station 12 that eliminates possible chips present at the ends of the semifinished section bars 4 that could compromise successive assembly thereof, and for loading, without resting, the section bars 4 that have just been finished by the cleaning station 12, in a drawer, which is not shown, of a buffer magazine 13.

The buffer magazine 13 is provided with a plurality of drawers, arranged for each containing a group of section bars 4 intended for making a determined casing 2.

In an embodiment of the invention, the buffer magazine 13 comprises thirty-six drawers.

The buffer magazine 13 comprises a loading side 15 where the section bars 4 removed from the unloading magazine 6 are positioned by the first robot 10 and an unloading side 16, from which the section bars 4 are unloaded, as will be disclosed below.

For example, in use, a pair of full drawers are positioned on the unloading side 16, each comprising a casing 2 to be assembled.

The system 1 further comprises a supervisory computer 14 arranged for controlling the buffer magazine 13.

In particular, the supervisory computer 14 assigns a first free drawer of the buffer magazine 13 to a group of section bars 4 coming from the unloading magazine 6 and arranged for making a determinate casing 2.

The system 1 further comprises a machine tool 200 arranged for assembling and machining the section bars 4 for making the casings 2.

The machine tool 200 comprises a first manipulating unit 17, provided with a second anthropomorphic robot 18, between the handling station 9 and the first manipulating unit 17 there being interposed the buffer magazine 13.

The second robot 18 is provided with gripping means arranged for removing the section bars 4 contained in a full drawer positioned on the unloading side 16 of the buffer magazine 13, positioning them one at a time on an assembly unit 19 and subsequently arranged for inserting into the latter corner joints 38 (Figure 6) removed from a corner joints magazine 39.

It should be noted that the drawers that have just been emptied are transferred from the unloading side 16 to the loading side 15 of the buffer magazine 13 to be filled with further section bars 4.

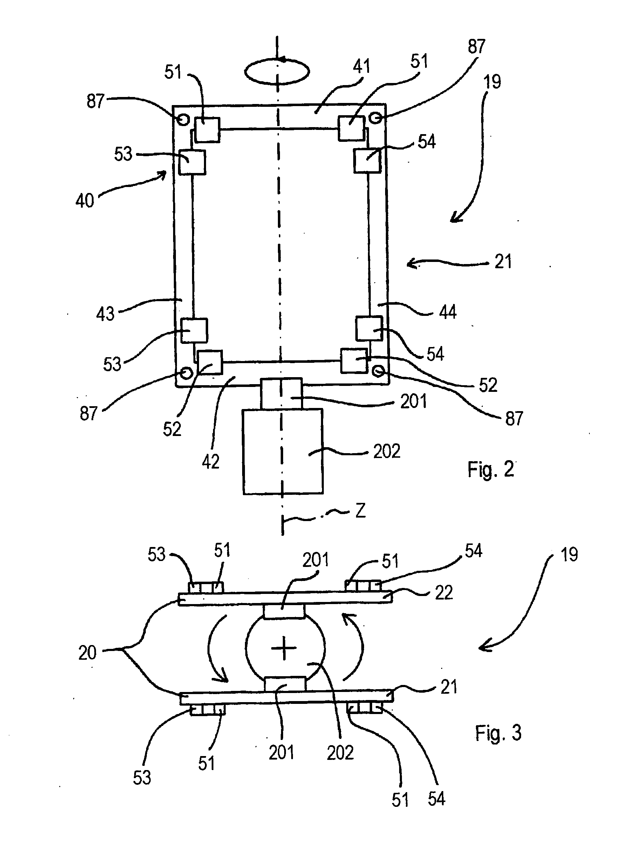

Returning to the assembly unit 19, shown schematically in Figures 2 and 3, this is arranged for supporting, centring and assembling the section bars 4.

The assembly unit 19, which is rotatable around a rotation axis Z, comprises a supporting frame body 20.

The supporting frame body 20 comprises a first frame 21 and a second frame 22 that are opposite one another, each arranged for supporting and assembling the section bars 4 and supported by a support 201 mounted on a motor 202. Subsequently there is disclosed in detail only the first frame 21, inasmuch as the second frame 22 is substantially and structurally similar to the latter.

The first frame 21, shown in Figure 2, comprises grasping means 40 arranged for grasping and moving the section bars 4.

The grasping means 40 comprises first grasping means 51, second grasping means 52, third grasping means 53 and fourth grasping means 54 arranged for each grasping a respective section bar 4.

The first grasping means 51, the second grasping means 52, the third grasping means 53 and the fourth grasping means 54 are respectively positioned along a first side 41, a second side 42, a third side 43 and a fourth side 44 of the first frame 21.

The first frame 21 further comprises a centring device arranged for centring the section bars 4 on the first frame 21 to give precise references to the second robot 18.

The centring device comprises first centring means 46, second centring means, third centring means and fourth centring means, that are not shown, positioned substantially parallel to the first side 41, to the second side 42, to the third side 43 and to the fourth side 44 and substantially opposite respectively the first grasping means 51, the second grasping means 52, the third grasping means 53 and the fourth grasping means 54.

Only the first centring means 46 is disclosed below inasmuch as the second centring means, the third centring means and the fourth centring means are substantially, structurally and functionally similar.

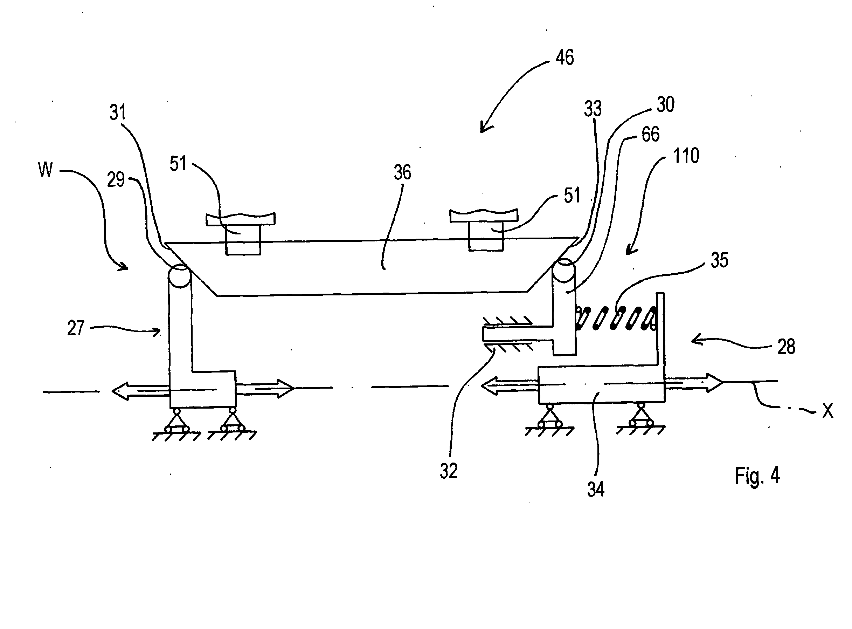

The first centring means 46, shown schematically in Figure 4, is arranged for defining a preset centring position W on the first work plane 21 for a first section bar 36.

The first centring means 46 is provided with compensating means 110 comprising a first abutment 27 and a second abutment 28 that are movable towards and away from one another through an forward and backward stroke of a preset length, along an operating direction X.

The first abutment 27, being substantially L-shaped, comprises a first active surface 29 arranged, in use, for contacting a first end 31 of the first section bar 36.

The second abutment 28 comprises a base element 34 connected by elastic means 35 to a compensating element 66, arranged for compensating possible dimensional variations of the section bars 4.

The compensating element 36 is in fact supported for sliding by guide means 32, associated with the base element 34, and the compensating element 36 is movable along the operating direction X with respect to the base element 34.

The compensating element 66 comprises a second active surface 30, facing the first active surface 29 and arranged for contacting a second end 33 of the section bar 4 opposite the first end 31. The first active surface 29 and the second active surface 30 cooperate to define the centring position W for the first section bar 36.

The operation of the first centring means 46 is disclosed below.

Initially, the second robot 18 removes from the buffer magazine 13 a first section bar 36 and a second section bar 56 and delivers the first section bar 36 and the second section bar 56 respectively to the first grasping means 51 and to the second grasping means 52, which grasp the first section bar 36 and the second section bar 56, without locking them.

It should be noted that once the first section bar 36 and the second section bar 56 have been grasped by the first grasping means 51 and by the second grasping means 52, both the first grasping means 51 and the second grasping means 52 proceed substantially simultaneously to centre the respective section bars; the operation of the first centring means 46 only is disclosed below inasmuch as the second centring means operates in a substantially similar manner. After the first section bar 36 has been grasped by the first grasping means 51, the first centring means 46 is driven, for example by an actuating means, to position the first abutment 27 and the second abutment 28 in the preset centring position W.

Still subsequently, the first grasping means 51 takes the first end 31 and the second end 33 of the first section bar 36 against the first centring means 46, which positions the first section bar 36 in the desired centring position W with respect to the first frame 21.

Possible dimensional variations of the first section bar 36, due, for example, to thermal dilation/contraction, imprecise machining or the like that would compromise correct centring of the first section bar 36 on the first frame 21 are compensated by the compensating element 66, that is movable towards/away from the base element 34 along the operating direction X.

Once centred, the first section bar 36 is locked firmly by the first grasping means 51 and the first centring means 46 is positioned in a rest position.

Subsequently, the second robot 18 inserts into suitable housings, which are not shown, obtained respectively in the first end 31 and in the second end 33 of the first section bar 36 a pair of corners joints 38 removed from the corner joints 39 magazine and into further housings that are not shown, obtained respectively in a third end 57 and into a fourth end 58 of the second section bar 56 a further pair of corner joints 38 (Figure 6).

It should be noted that in the case of section bars provided with thermal break, inserting four corners for each section bar can be provided.

Subsequently, a third section bar 59 and a fourth section bar 60 that are opposite one another and interposed between the first section bar 36 and the second section bar 56 are loaded and centred on the first frame 21 in a similar manner to what has been disclosed above.

Still subsequently, the third grasping means 53 and the fourth grasping means 54, and with the third grasping means 53 and the fourth grasping means 54 the third section bar 59 and the fourth section bar 60 are moved substantially parallel to the axis Z towards the second section bar 56 by the first grasping means 51, and then by the first section bar 36, moved in the direction indicated by the first arrow F1.

In this way the first section bar 36, the second section bar 56, the third section bar 59 and the fourth section bar 60 are compacted until the first section bar 36, the second section bar 56, the third section bar 59 and the fourth section bar 60 form the casing 2.

It should be noted that the information on the number and type of corner joints to be used is supplied to the second robot 18 by the supervisory computer 14.

After the casing 2 has been compacted, the assembly unit 19 rotates around the rotation axis Z thereof by about 180°, in such a way that, on the one side, the first frame 21 faces a second manipulating unit 67 arranged for subjecting the section bars 4 to a desired machining, such as, for example, caulking, gluing, broaching, drilling, screwing, and on the other side, the second work plane 22 faces the second robot 18.

In this way, whilst the second manipulating unit 67 performs the aforesaid machinings, the first manipulating unit 17, by the second robot 18, removes further section bars 4 contained in a further full drawer of the buffer magazine 13 positioned on the unloading side 16, positions the further section bars 4 one at a time on the second work plane 22, and assembles the further section bars 4 in a similar manner to what has been disclosed previously.

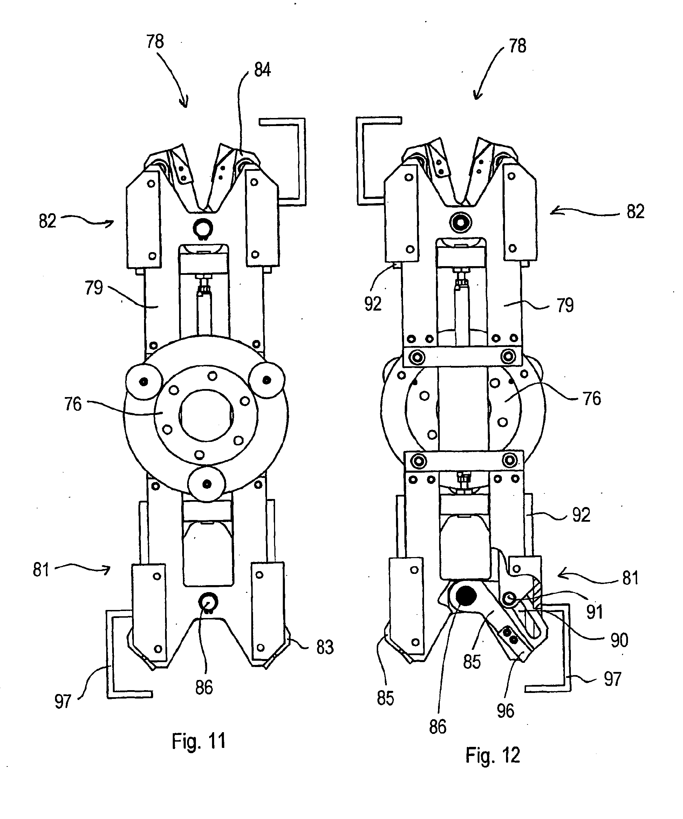

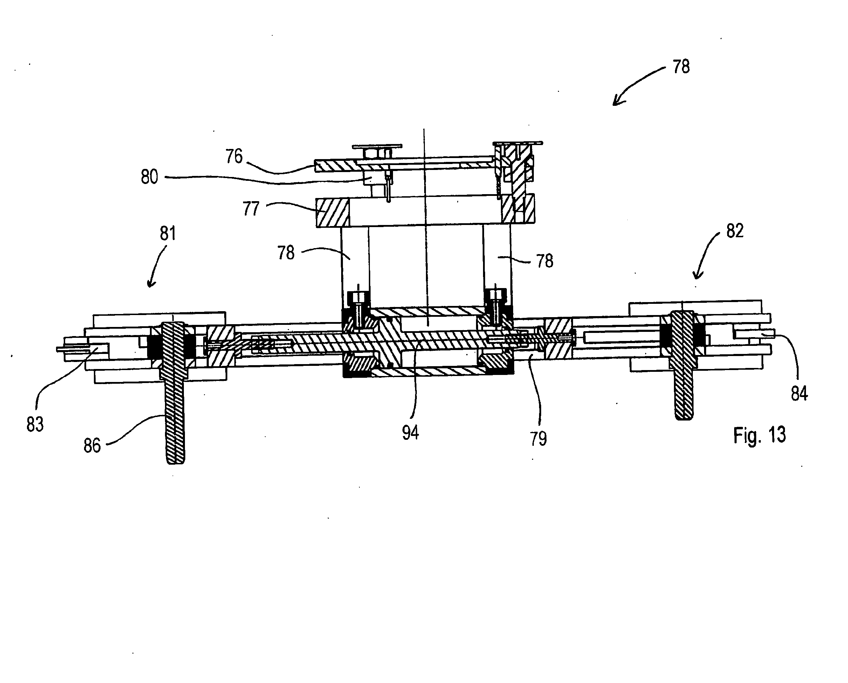

The second manipulating unit 67 comprises a third anthropomorphic robot 68, provided with a caulking and gluing device 78, shown in Figures 11 to 13, arranged for caulking and gluing the first corner 71, the second corner 72, the third corner 73 and the fourth corner 74 of the casing 2.

The caulking and gluing device 78 comprises a fixing flange 76, having a substantially circular shape, arranged for being fixed through threaded connecting means to the third robot 68.

With the flange 76 there is associated a connection 77 arranged for supporting by means of a plurality of tubular elements 78 a framework 79, between the connection 77 and the flange 76 there being interposed elastic elements 80. The framework 79 is arranged for supporting respectively at a first end portion 81 and at a second end portion 82 a first caulking clamp 83 and a second caulking clamp 84 arranged for caulking respectively section bars devoid of or provided with thermal break.

Only the first clamp 83 is disclosed below, inasmuch as the second clamp 84 is substantially and functionally similar to the latter.

The first clamp 83 comprises a pair of jaws 85 that are rotatable around pin means 86.

The pin means 86 is associated with and projects from the framework 79 and is arranged, in use, for removably engaging seat means 87 obtained in the supporting frame body 20 of the assembly unit 19.

In this way, in use, the caulking forces generated by the first clamp 83 are discharged onto the supporting frame body 20 and not onto the third robot 68.

Each jaw 85 further comprises cam means 90 each arranged for engaging a roller 91.

The roller 91 is moved by a presser 92 driven by a piston 94 and slidable along a guide of the framework 79.

In this way, by driving the presser 92 the roller 91 is forced to slide along the cam means 90, closing and/or opening the jaws 85.

Each of the jaws 85 further supports a caulking cutter 96 at an end thereof.

The caulking and gluing device 78 further comprises a nozzle 97 arranged for injecting into holes, which are not shown, obtained in the section bars 4 a desired quantity of glue, removed from a doser that is not shown and arranged for fixing the section bars 4 in a stable manner.

In an embodiment of the invention, which is not shown, the third anthropomorphic robot 68 is provided with a drilling unit arranged for drilling said section bars 4.

In a further embodiment of the invention, which is not shown, the third anthropomorphic robot 68 is provided with a broaching machine arranged for inserting broaches into the section bars 4.

In a still further embodiment of the invention, which is not shown, the third anthropomorphic robot 68 is provided with a screwing head.

In another embodiment of the invention, which is not shown, also the second robot 18 can be provided with a caulking and gluing device, with a drilling unit, with a broaching machine, and with a screwing head.

Once the casing 2 has been fixed stably, the third robot 68 rotates and drives a safety switch that stops the caulking machine 1 and opens an access door 100.

During opening of the access door 100 a printing device 101 prints a recognition label on the casing 2 that has just been made.

Subsequently, the casing 2 that has just been made can be removed from the first frame 21.

Once the casing 2 has been unloaded, the operator 11 presses an end-of-unloading switch that closes the access door 100 and gives a signal to the assembly unit 19 by the supervisory computer 14 to rotate the supporting frame body 20 to enable the second manipulating unit 67 to fix the further casing 2 that was previously assembled by the second frame 22 and by the second robot 18.

Upstream of the first manipulating unit 17 there can also be provided a spreading unit arranged for spreading a seal on the end portions of the section bars 4.

It should be noted that owing to the invention it is possible to make a highly automated machine tool that enables the metal section bars 2 to be centred, assembled and caulked automatically.

Lastly, it should be noted that owing to the aforesaid invention it is possible to make a particularly versatile machine tool inasmuch as depending on the equipment mounted on the second manipulating unit 67 it is possible to subject the section bars 4 to a plurality of machinings such as caulking, gluing, drilling, broaching and screwing.

## Claims

1. Machine tool for assembling metal section bars (4) of casings (2) comprising an assembly unit (19) arranged for supporting and assembling said metal section bars (4), said assembly unit (19) being movable between a first operating position in which said metal section bars (4) are positionable on said assembly unit (19) and a second operating position in which said metal section bars (4) can be subjected to a desired machining, **characterized in that** said assembly unit (19) is rotatable around a rotation axis (Z) between said first operating position and said second operating position, said assembly unit (19) comprising supporting frame means (20) arranged for supporting said metal section bars (4) and said casings (2), said supporting frame means (20) comprises a first frame (21) and a second frame (22) positioned on sides opposite with respect to said rotation axis (Z).

2. Machine according to claim 1, wherein at said first operating position there is provided a first manipulating unit (17) and at said second operating position there is provided a second manipulating unit (67), said assembly unit (19) being positioned between said first manipulating unit (17) and said second manipulating unit (67).

3. Machine according to one of preceding claim, wherein said supporting frame means (20) comprises grasping means (40) arranged for grasping and moving said section bars (4) to assemble said casings (2).

4. Machine according to claim 3, wherein said first frame (21) and/or said second frame (22) comprises said grasping means (40).

5. Machine according to claim 3 or 4, wherein said grasping means (40) is provided on a first side (41), on a second side (42), on a third side (43), and on a fourth side (44) of said supporting frame means (20).

6. Machine according to any one of preceding claims, and comprising centring means (46) associated with said supporting frame means (20) and arranged for centring said metal section bars (4) on said supporting frame means (20).

7. Machine according to any one of claims 2 to 6, as claim 3 and claim 6 are appended to claim 2, wherein said first manipulating unit (17) and/or said second manipulating unit (67) comprise anthropomorphic robot means (18, 68).

8. Machine according to claim 7, wherein in said first operating position said anthropomorphic robot means (18, 68) comprises gripping means arranged for inserting into a first end (31) and into a second end (33) of said section bar (4) connecting means (38) arranged for connecting said section bars (4).

9. Machine according to claim 7 or 8, wherein in said second operating position said anthropomorphic robot means (18, 68) is provided with a drilling unit arranged for drilling said section bars (4) or with a broaching machine arranged for inserting broaches into said section bars (44) or with a screwing head or with caulking clamp means (78) arranged for caulking and gluing said section bars (4).

10. Machine according to claim 9, and further comprising coupling means (86, 87) arranged for removably coupling said clamp means (78) with said supporting frame means (20).

11. Machine according to any preceding claim, and further comprising a cutting and milling centre (5) arranged for cutting and milling said section bars (4).

12. Machine according to claim 11, and further comprising a loading magazine (3) arranged for moving said section bars (4) to said cutting and milling centre (5) and an unloading magazine (6) arranged for receiving said section bars (4) from said cutting and milling centre (5).

13. Machine according to any preceding claim, and further comprising a finishing device (12) arranged for removing from said section bars (4) possible machining chips.

14. Machine according to claim 13 as appended to claim 12, and comprising handling means (10) arranged for transferring said section bars (4) from said unloading magazine (6) to said finishing device (12).

15. Machine according to claim 13 or 14, and comprising a magazine (13) arranged for receiving said section bars (4) from said finishing device (12).

## Patentansprüche

1. Werkzeugmaschine zum Montieren von Metallprofilsträngen (4) von Rahmungen (2), mit einer Montageeinheit (19), die zum Halten und Montieren der Metallprofilstränge (4) ausgelegt ist, wobei die Montageeinheit (19) zwischen einer ersten Betriebsposition, in der die Metallprofilstränge (4) an der Montageeinheit (19) positionierbar sind, und einer zweiten Betriebsposition beweglich ist, in der die Metallprofilstränge (4) einer gewünschten Bearbeitung unterzogen werden können, **dadurch gekennzeichnet, dass** die Montageeinheit (19) um eine Drehachse (Z) zwischen der ersten Betriebsposition und der zweiten Betriebsposition drehbar ist, wobei die Montageeinheit (19) Halterahmenmittel (20) aufweist, die zum Halten der Metallprofilstränge (4) und der Rahmungen (2) ausgelegt ist, wobei die Halterahmenmittel (20) einen ersten Rahmen (21) und einen zweiten Rahmen (22) aufweisen, die bezüglich der Drehachse (Z) an entgegengesetzten Seiten positioniert sind.

2. Maschine nach Anspruch 1, wobei an der ersten Betriebsposition eine erste Manipulationseinheit (17) und an der zweiten Betriebsposition eine zweite Manipulationseinheit (67) vorgesehen ist, wobei die Montageeinheit (19) zwischen der ersten Manipulationseinheit (17) und der zweiten Manipulationseinheit (67) positioniert ist.

3. Maschine nach einem der vorhergehenden Ansprüche, wobei die Halterahmenmittel (20) Greifmittel (40) aufweisen, die zum Greifen und Bewegen der Profilstränge (4) ausgelegt sind, um die Rahmungen (2) zu montieren.

4. Maschine nach Anspruch 3, wobei der erste Rahmen (21) und/oder der zweite Rahmen (22) die Greifmittel (40) aufweist.

5. Maschine nach Anspruch 3 oder 4, wobei die Greifmittel (40) auf einer ersten Seite (41), einer zweiten Seite (42), einer dritten Seite (43) und einer vierten Seite (44) der Halterahmenmittel (20) vorgesehen sind.

6. Maschine nach einem der vorhergehenden Ansprüche, und mit Zentriermitteln (46), die den Halterahmenmitteln (20) zugeordnet sind und zum Zentrieren der Metallprofilstränge (4) an den Halterahmenmitteln (20) ausgelegt sind.

7. Maschine nach einem der Ansprüche 2 bis 6, wenn Anspruch 3 und Anspruch 6 von Anspruch 2 abhängig sind, wobei die erste Manipulationseinheit (17) und/oder die zweite Manipulationseinheit (67) Gelenkrobotermittel (18, 68) aufweist.

8. Maschine nach Anspruch 7, wobei in der ersten Betriebsposition die Gelenkrobotermittel (18, 68) Greifmittel, die zum Einsetzen in ein erstes Ende (31) und in ein zweites Ende (33) des Profilstrangs (4) ausgelegt sind, und Verbindungsmittel (38) aufweisen, die zum Verbinden der Profilstränge (4) ausgelegt sind.

9. Maschine nach Anspruch 7 oder 8, wobei in der zweiten Betriebsposition die Gelenkrobotermittel (18, 68) mit einer Bohreinheit versehen sind, die zum Bohren der Profilstränge (4) ausgelegt ist, oder mit einer Zapfungsmaschine, die zum Einsetzen von Zapfen in die Profilstränge (4) ausgelegt ist, oder mit einem Schraubkopf oder mit Verstemmklemmmitteln (78), die zum Verstemmen und Kleben der Profilstränge (4) ausgelegt sind.

10. Maschine nach Anspruch 9, weiterhin mit Kopplungsmitteln (86, 87), die zum lösbaren Koppeln der Klemmmittel (78) mit den Halterahmenmitteln (20) ausgelegt sind.

11. Maschine nach einem der vorhergehenden Ansprüche, weiterhin mit einem Schneide- und Fräszentrum (5), das zum Schneiden und Fräsen der Profilstränge (4) ausgelegt ist.

12. Maschine nach Anspruch 11, weiterhin mit einem Lademagazin (3), das zum Bewegen der Profilstränge (4) zu dem Schneide- und Fräszentrum (5) ausgelegt ist, und einem Entlademagazin (6), das zum Aufnehmen der Profilstränge (4) von dem Schneide- und Fräszentrum (5) ausgelegt ist.

13. Maschine nach einem der vorhergehenden Ansprüche, weiterhin mit einer Endbearbeitungseinrichtung (12), die zum Entfernen von möglichen Bearbeitungsabfällen von den Profilsträngen (4) ausgelegt ist.

14. Maschine nach Anspruch 13, wenn von Anspruch 12 abhängig, und mit Handhabungsmitteln (10), die zum Übertragen der Profilstränge (4) von dem Entlademagazin (6) zu der Endbearbeitungseinrichtung (12) ausgelegt sind.

15. Maschine nach Anspruch 13 oder 14, und mit einem Magazin (13), das zum Aufnehmen der Profilstränge (4) von der Endbearbeitungseinrichtung (12) ausgelegt ist.

## Revendications

1. Machine-outil pour assembler des profilés métalliques (4) de châssis (2), comprenant une unité d'assemblage (19) prévue pour supporter et assembler lesdits profilés métalliques (4), ladite unité d'assemblage (19) étant mobile entre une première position de fonctionnement, dans laquelle lesdits profilés métalliques (4) sont positionnables sur ladite unité d'assemblage (19), et une deuxième position de fonctionnement, dans laquelle lesdits profilés métalliques (4) peuvent être soumis à un usinage désiré, ***caractérisée en ce que*** ladite unité d'assemblage (19) est rotative autour d'un axe de rotation (Z) entre ladite première position de fonctionnement et ladite deuxième position de fonctionnement, ladite unité d'assemblage (19) comprenant des moyens (20) de cadre de support prévus pour supporter lesdits profilés métalliques (4) et lesdits châssis (2), lesdits moyens (20) de cadre de support comprennent un premier cadre (21) et un deuxième cadre (22) positionnés sur des côtés opposés dudit axe de rotation (Z).

2. Machine-outil selon la revendication 1, dans laquelle, en correspondance avec ladite première position de fonctionnement, il est prévu une première unité de manipulation (17), et, en correspondance avec ladite deuxième position de fonctionnement, il est prévu une deuxième unité de manipulation (67), ladite unité d'assemblage (19) étant positionnée entre ladite première unité de manipulation (17) et ladite deuxième unité de manipulation (67).

3. Machine-outil selon l'une quelconque des revendications précédentes, dans laquelle lesdits moyens (20) de cadre de support comprennent des moyens de préhension (40) prévus pour saisir et déplacer lesdits profilés (4) afin d'assembler lesdits châssis (2).

4. Machine-outil selon la revendication 3, dans laquelle ledit premier cadre (21) et/ou ledit deuxième cadre (22) comprend(comprennent) lesdits moyens de préhension (40).

5. Machine-outil selon la revendication 3 ou 4, dans laquelle lesdits moyens de préhension (40) sont prévus sur un premier côté (41), sur un deuxième côté (42), sur un troisième côté (43) et sur un quatrième côté (44) desdits moyens (20) de cadre de support.

6. Machine-outil selon l'une quelconque des revendications précédentes, et comprenant des moyens de centrage (46) associés auxdits moyens (20) de cadre de support et prévus pour centrer lesdits profilés métalliques (4) sur lesdits moyens (20) de cadre de support.

7. Machine-outil selon l'une quelconque des revendications 2 à 6, lorsque la revendication 3 et la revendication 6 sont dépendantes de la revendication 2, dans laquelle ladite première unité de manipulation (17) et/ou ladite deuxième unité de manipulation (67) comprennent des moyens (18, 68) de robot anthropomorphique.

8. Machine-outil selon la revendication 7, dans laquelle, dans ladite première position de fonctionnement, lesdits moyens (18, 68) de robot anthropomorphique comprennent des moyens de préhension prévus pour insérer dans une première extrémité (31) et dans une deuxième extrémité (33) dudit profilé (4), des moyens de raccordement (38) prévus pour le raccordement desdits profilés (4).

9. Machine-outil selon la revendication 7 ou 8, dans laquelle, dans ladite deuxième position de fonctionnement, lesdits moyens (18, 68) de robot anthropomorphique sont munis d'une unité de perçage prévue pour percer lesdits profilés (4), ou d'une machine à brocher prévue pour insérer des broches dans lesdits profilés (4), ou d'une tête de vissage, ou de moyens de pince de matage (78) prévus pour mater et coller lesdits profilés (4).

10. Machine-outil selon la revendication 9, et comprenant en outre des moyens d'accouplement (86, 87) prévus pour accoupler de manière amovible lesdits moyens de pince (78) avec lesdits moyens (20) de cadre de support.

11. Machine-outil selon l'une quelconque des revendications précédentes, et comprenant en outre un centre (5) de découpe et de fraisage prévu pour découper et fraiser lesdits profilés (4).

12. Machine-outil selon la revendication 11, et comprenant en outre un magasin de chargement (3) prévu pour déplacer lesdits profilés (4) jusqu'audit centre (5) de découpe et de fraisage et un magasin de déchargement (6) prévu pour recevoir lesdits profilés (4) dudit centre de découpe et de fraisage (5).

13. Machine-outil selon l'une quelconque des revendications précédentes, et comprenant en outre un dispositif de finition (12) prévu pour retirer desdits profilés (4) d'éventuels copeaux d'usinage.

14. Machine-outil selon la revendication 13 lorsqu'elle est dépendante de la revendication 12, et comprenant des moyens de manipulation (10) prévus pour transférer lesdits profilés (4) dudit magasin de déchargement (6) jusqu'audit dispositif de finition (12).

15. Machine-outil selon la revendication 13 ou 14, et comprenant un magasin (13) prévu pour recevoir lesdits profilés (4) dudit dispositif de finition (12).
